# EUROPEAN PATENT APPLICATION

(11) **EP 1 139 244 A2**
(43) Date of publication of application: **04.10.2001**
(21) Application number: 00118677.4
(22) Date of filing: 29.08.2000
(51) Int. Cl.: G06F 17/60

(54) **Method and system for selling data**

(30) Priority: 31.03.2000 JP 2000101212
(71) Applicant: Hitachi, Ltd., Chiyoda-ku, Tokyo 101-8010 (JP)
(72) Inventor: Kondo, Kaori, c/o Hitachi, Ltd., Intell. Property, Chiyoda-ku, Tokyo 100-8220 (JP); Kodama, Kazuyuki, Hitachi, Ltd., Intell. Property, Chiyoda-ku, Tokyo 100-8220 (JP); Matsuzawa, Shigeru, Hitachi, Ltd, Intell. Property, Chiyoda-ku, Tokyo 100-8220 (JP)
(74) Representative: Strehl Schübel-Hopf & Partner

(57) **Abstract**

Desired data is retrieved (202). A part of the data which contains a buried electronic watermark is extracted from the retrieved data and output (204). A section of data where the electronic watermark is buried is detected from the data (205). A charge unit corresponding to the detected electronic watermark information is retrieved from a customer management database (80), and a charge for use of the picture information is calculated (206).

## Description

### BACKGROUND OF THE INVENTION

The present invention relates to data selling techniques for selling a part of already created (picture) data as a material for creating another production, that is, for a so-called secondary use.

Documentary pictures such as "news films for theaters", "cultural pictures", "educational pictures", "industrial pictures", "science films" and "prefectural politics films" have high referential value. There are great needs for them in broadcasting, educational and industrial fields. Those documentary pictures are usable (extractable) only in required portions thereof although not in units of a program. At present, the documentary pictures each are kept in the form of a film or an analog tape. Thus, the past circulation requires the time-consuming work that (1) a user inquires of a content holder of a company by telephone about whether there is a picture which the user desires; if there is, the user visits the company and watch and listen to the film by permission; that (2) the user finds out a necessary scene in the film and applies for borrowing a tape involving the scene; (3) that the user contracts to use the film; and that (4) the contents holder extracts and copies the scene from the film to an analog tape and sends it to the user. In the actual production of a program, it occurs very often in the course of producing the program that pictures borrowed at the beginning of planing the program are not used at all or that a change in the planned program content including reducing a planned time for which the picture is to be used. Thus, a charge for use of the film cannot be calculated from the duration time of the picture which the content holder extracted and sent to the user, but is calculated from the time for which the picture was used in the actually produced program. The content holder receives the finished product from the user, visually measures the time when the picture was used, and charges for the time.

A homepage of a picture retrieval system which uses the Internet is http://www.footage.net. In this case, a picture is retrievable with a keyword, and a result of the retrieval is displayed on a text base and cannot be referred to in animation.

### SUMMARY OF THE INVENTION

There is no appropriate method of verifying whether the contents of a contract (an object to use the picture, the duration time of the picture used, etc.,) are obeyed in a secondary use. In order to avoid the secondary use of the picture departing from the contents of the contract, the lendee is indispensably limited to one of reliable customers or clients for the lender. This applies to music.

It is therefor an object of the present invention to provide a method and system for selling data which includes adding to data information which indicates a source of the data to clarify a copyright holder of the data.

In order to achieve the above object, according to the present invention, there is provided a method of selling data, comprising the steps of: retrieving data; extracting a part of data which contains a buried electronic watermark from the retrieved data and outputting the extracted data; and detecting the electronic watermark buried in the output data. Thus, the present invention is capable of adding to data information which indicates the data source to clarify a copyright holder of the data.

### BRIEF DESCRIPTION OF THE DRAWINGS

FIG. 1 illustrates business related to the present invention;
FIG. 2 is a basic schematic (of a selling device) of the present invention;
FIG. 3 is a basic schematic (of a buying device) of the present invention;
FIG. 4 is a flowchart indicative a business processing method according to the present invention;
FIG. 5 is a whole scheme of an electronic watermark;
FIG. 6 illustrates the principles of extracting data;
FIG. 7 illustrates a principle of detecting an electronic watermark;
FIG. 8 is a flowchart indicative of an encode/index program;
FIG. 9 illustrates an annotation management database;
FIG. 10 is a flowchart of a promotion/retrieval/net contract program;
FIG. 11A shows a part of a customer management database;
FIG. 11B shows the remainder of the customer management database;
FIG. 12 is a flowchart of registering a customer management database;
FIG. 13 is a flowchart of an electronic watermark detection/picture use confirmation program; and
FIG. 14 shows a worktable.

### DESCRIPTION OF THE EMBODIMENTS

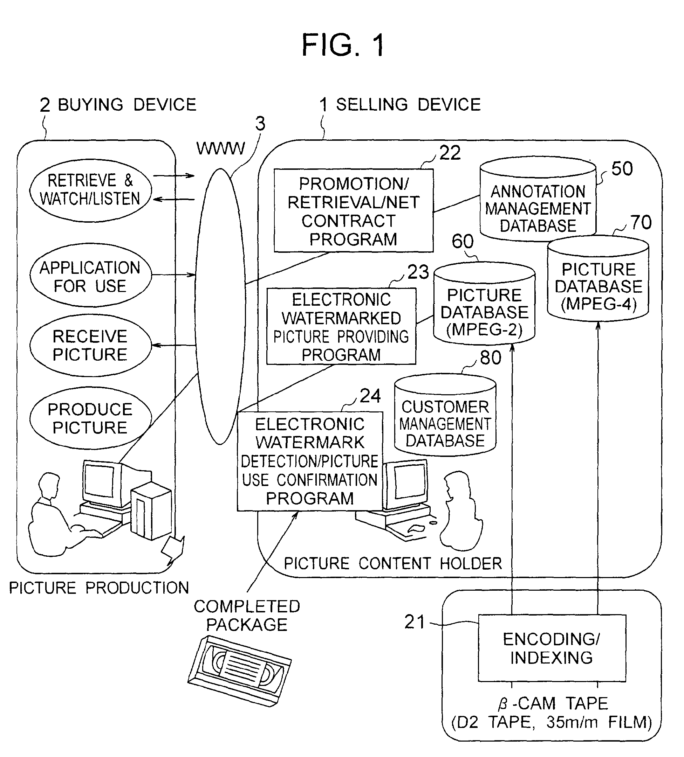

An embodiment of the present invention will be described in detail with reference to the accompanying drawings. Business handled in the present invention will be described with reference to FIG. 1. This business comprises pay lending of pictures for a secondary use performed by a picture content holder (hereinafter referred to as a seller) on a WWW (World Wide Web) 3. The main user comprises a picture producing agent (hereinafter refers to as a buyer). Pictures (a picture database (MPEG-2) 60, a picture database (MPEG-4) 70 and their retrieval data (annotation management database 50) are prestored by an encode/index program 21 on a selling device 1 which the seller or his or her agent manages. The buyer is able to retrieve, watch and listen to, and apply for use of, a picture from a buying device 2 based on a promotion/retrieval/net contract program 22. The buyer extracts a section of picture data which the user applied for using, from the picture database (MPEG-2) 60 based on an electronic watermarked picture providing program 23, and then transfers it to the buyer. The buyer uses a part or all of the transferred picture file (hereinafter referred to as being secondarily used) to create another picture (hereinafter referred to as a completed package) 4, and provides it to the seller. The seller receives the completed package 4, detects the secondarily used section from the package 4 based on an electronic watermarked detection/picture use confirmation program 24, calculates a charge for use of the picture section, and then charges the buyer for use of the picture section.

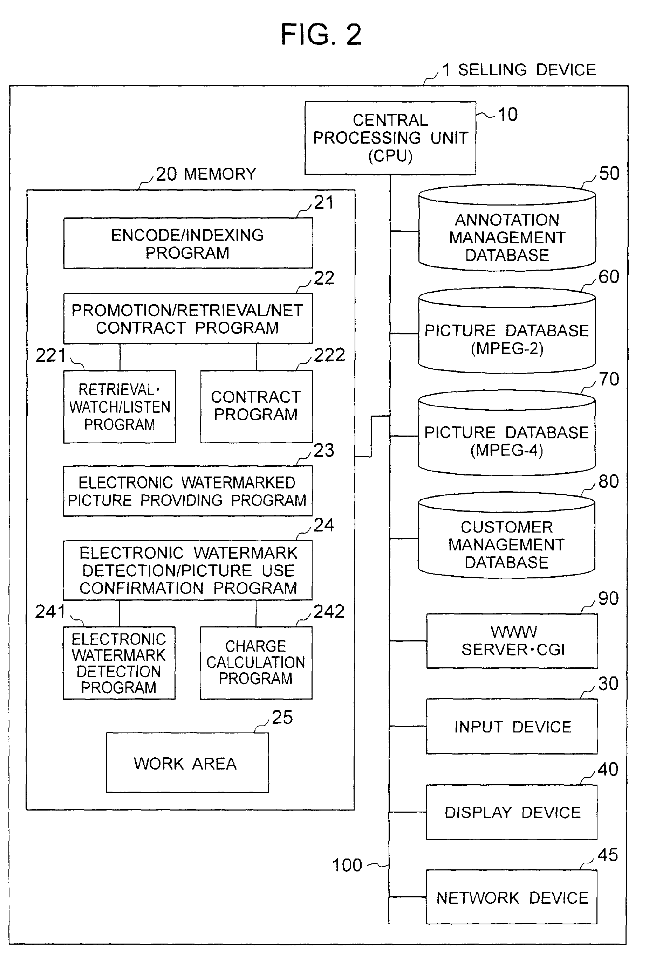

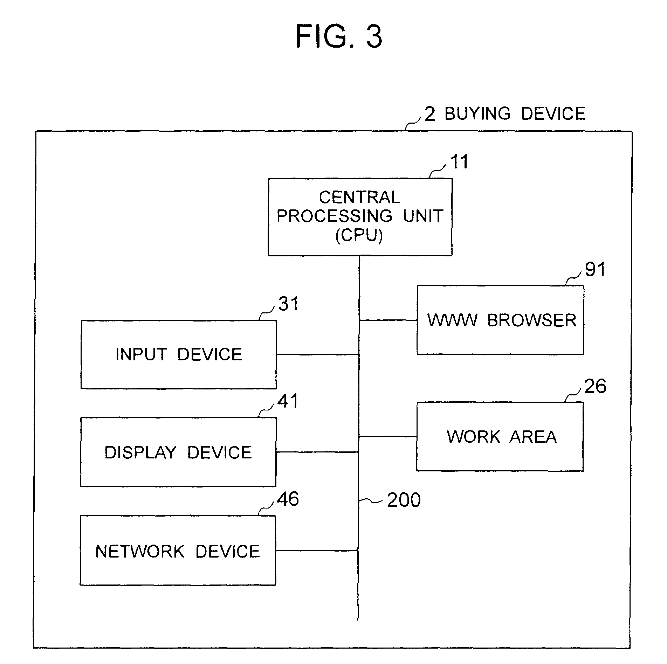

FIGS. 2 and 3 respectively show the selling device 1 and buying device 2 according to the present invention.

The selling device 1 of FIG. 2 comprises a Central Processing Unit (CPU) 10 which controls the whole system and performs various processes, a memory 20 which stores processing programs performed by CPU 10, data under processing, etc., an input device 30 which inputs commands and data to the selling device 1, a display device 40 which displays a result of processing, etc., a network device 45 which connects the selling device 1 to the Internet, an annotation management database 50, a picture database (MPEG-2) 60 for storing a picture compressed according to MPEG-2 standards, a picture database (MPEG-4) 70 for storing a picture compressed according to MPEG-4 standards, a customer management database 80, and a WWW server · CGI (Common Gateway Interface: Application Program Interface) 90, connected through a data/control bus 100. The databases 50-80 are each comprised of files/memories, which may be stored collectively in a hard disk device.

Especially, it is practical that the picture databases (MPEG-2) 60 and (MPEG-4) 70 are stored in the hard disk device. The encode/index program 21, promotion/retrieval/net contract program 22, electronic watermarked picture providing program 23, and electronic watermark detection/picture use confirmation program 24 are respectively loaded on the memory 20, as requested, to ensure a work area 25. The promotion/ retrieval/net contract program 22 includes a retrieval and watch/listen program 221 and a contract program 222. The electronic watermark detection/picture use confirmation program 24 includes a electronic watermark detection program 241 and a charge calculation program 242. The buying device 2 of FIG. 3 comprises a central processing unit (CPU) 11 which controls the whole system and which performs various processes, an input device 31 which inputs commands/data to the buying device, a display device 41 which displays a result of retrieval and others, a network device 46 which connects the buyer 2 to the Internet, a WWW browser 91, and a work area 26, which are connected by a data/control bus 200.

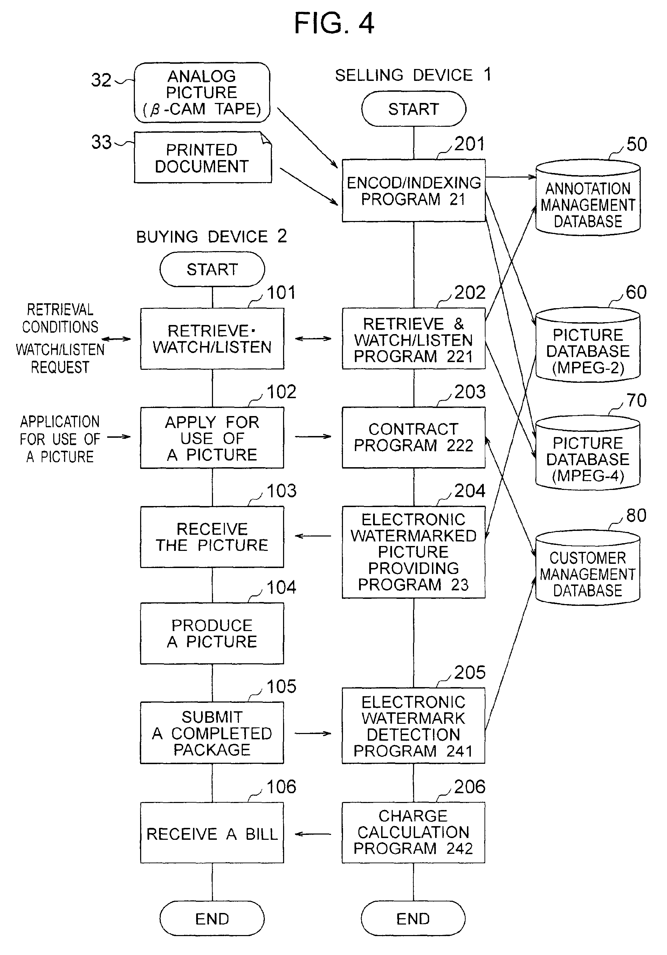

A method of processing business according to the present invention will be explained with reference to a flowchart of FIG. 4.

The selling device 1 and the buying device 2 are computers operated by the seller and the buyer, respectively, and comprise network devices 45 and 46, respectively, connectable physically to the Internet.

In step 201 data are prestored in the annotation management database 50, picture database (MPEG-2) 60, and picture database (MPEG-4) 70, respectively, based on the encode/index program 21 in the selling device 1. The annotation management database 50 prestores character data for picture retrieval which an operator has input manually through the input device 30 by referring mainly to a printed picture documents 33. A picture stored in a medium such as a β-cam tape is digitized with an analog picture 32, compressed according to standards corresponding to the object of its use, and stored. The picture database (MPEG-2) 60 prestores pictures for the user's secondary use and having qualities which can withstand broadcasting sufficiently according to the MPEG-2 standards. The picture database (MPEG -4) 70 stores pictures according to the MPEG-4 standards watchable and listenable real-time via the Internet.

The promotion/retrieval/net contract program 22 is required to be operable at all times when the WWW sever · CGI 90 is operated. In step 101 when the buyer starts up the WWW browser 91 from the input device 31 of the buying device 2 and specifies a URL (Uniform Resource Locator) indicative of an address of a homepage for picture retrieval, the display device 41 displays a retrieval picture. When the buyer inputs retrieval conditions of the picture to the input device 31, in step 202 CPU 11 receives the retrieval conditions via the WWW sever · CGI 90, starts up the retrieval watch/listen program 221 of the promotion/retrieval/net contract program 22 to retrieve the annotation management database 50 based on the input retrieval conditions, and then displays a result of the retrieval on the display device 41 of the buyer device 2 via the WWW sever · CGI 90. The buyer inputs to the input device 31 a picture to be watched/listened to based on the result of the retrieval. The retrieval watch/listen program 221 retrieves an appropriate picture from the picture database (MPEG-4) 70 and displays it on the display device 41. After watching/listening to the picture, in step 102 the buyer then inputs to the input device 31 of the buying device 2 information required for applying for using a section of a picture to be borrowed for a secondary use. The selling device 1 receives the application for using the part of the picture from the buying device 2, the contract program 222 starts up, and the seller confirms the contents of a contract on the display device 40 (step 203). If there are no problems concerning the contents of the contract, and either no problems in the past dealings as a result of the seller's referring to the customer management database 80, the seller starts up the electronic watermarked picture providing program 23 (step 204), retrieves a picture file to be lent from the picture database (MPEG-2) 60, extracts the picture data having the section for which the buyer applied for using, stores it in another file, and then transfers this file to the buying device 2 via the network device 45. The buyer receives the picture file extracted in step 103 via the network device 46, and produces a picture, using a part or all of the received picture file (step 104). Thereafter, in step 105 the buyer provides the seller with a completed package of a tape involving the product. The seller performs on the received package a required process based on the electronic watermark detection/picture use confirmation program 24. In step 205 an electronic watermark detection program 241 starts up to detect from the package the duration time of the picture in which the electronic watermark is buried. In step 206 the use charge calculation program 242 starts up, calculates a charge for using the picture by referring to the customer management database 80, and then charges the buyer for using the picture. In step 106 the buyer receives a bill for charging the use of the picture.

A method of using an electronic watermark technique in the present embodiment will be explained next. The electronic watermark technique is described in detail on Nikkei Electronics No.683 (published February 24, 1997), pp.99-124. Thus, the details of this technique will be omitted. This technique involves incorporating some information in a concealed state into digital data and is used to indicate a copyright of a product to prevent illegal copy of the digital product. The electronic watermark has the features that even when data is subjected to compression or filtering, the buried watermark information is not lost, and that the buried watermark information cannot be visually recognized. In this embodiment, information about the seller and a picture ID for identifying the product are buried in the data.

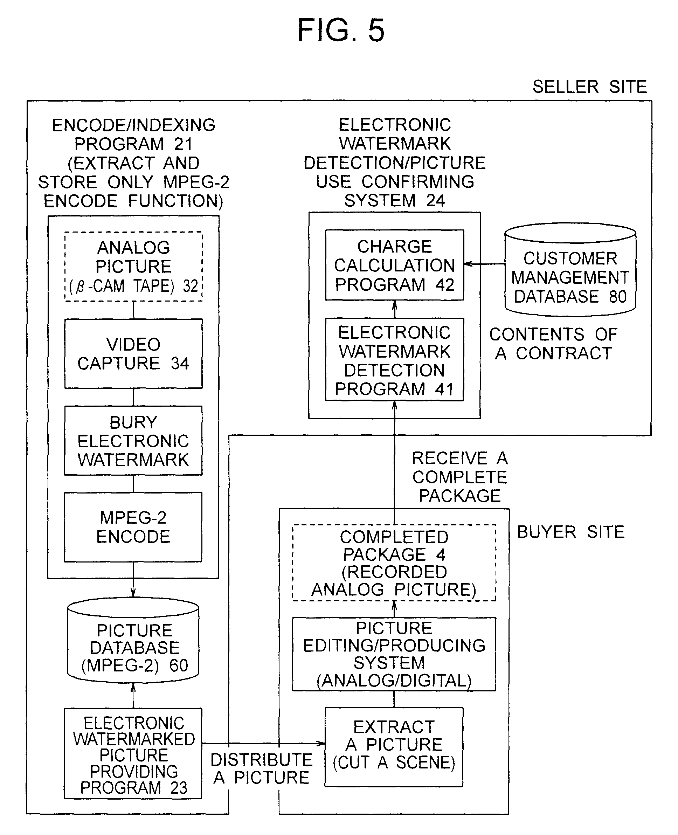

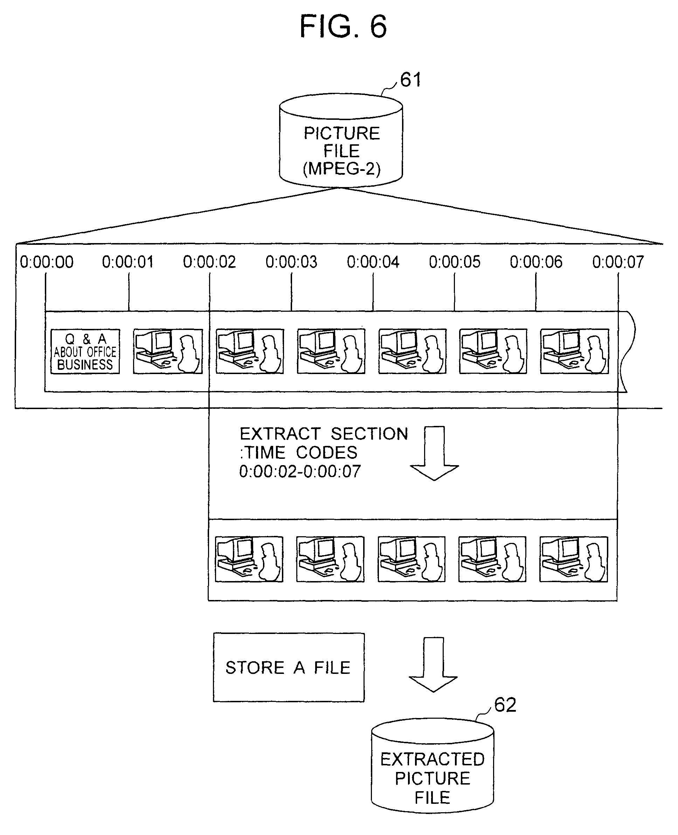

A method of using the electronic watermark in the present embodiment will be explained with reference to FIG. 5. Electronic watermark information has been buried when a picture of the picture database (MPEG-2) 60 is encoded according to the MPEG-2 standards in the encoding/index program 21. A picture is extracted in the electronic watermarked picture providing program 23 according to the buyer's request. FIG. 6 illustrates the principle of extracting a picture. A picture file 61 is stored in the picture database (MPEG-2) 60. Only a picture in a specified range is extracted from the picture file 61, and stored in a copy picture file 62, which is then transferred to the buying device 2 via the network device 45. The buyer uses the picture of the extracted file 62 to produce a new picture in the picture editing/producing system, and then provides the seller with a complete package 4 of the produced picture. The seller receives the package 4, detects the electronic watermark, and calculates a charge for using the picture.

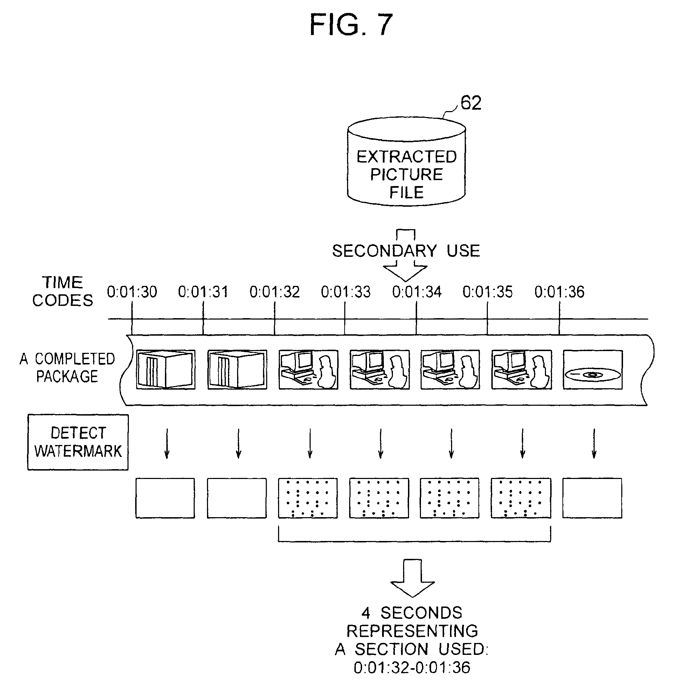

FIG. 7 illustrates the principle of detecting the electronic watermark. When a completed package is placed on an electronic watermark detector (not shown) in the electronic watermark detection program 241, it is determined whether there is an electronic watermark contained. It is assumed that a section (time) for which the electronic watermark is present is detected. It is known here that a duration time of 4 seconds (0:01:32-0:01:36) was used. The charge calculation program 242 calculates a charge for having used the picture from the time taken for a secondary use and a unit price of use registered in the customer management database 80, and hence a sum of money corresponding to 4 seconds is calculated as a charge for use of the picture.

The encoding/index program 21 converts analog picture data to digital picture data, stores the digital picture data compressed according to the MPEG-2 standards in the picture database (MPEG-2) 60 and also stores the picture data compressed according to the MPEG-4 standards in the picture database (MPEG-4) 70.

A point where a scene changes is extracted from the picture and the picture is then divided accordingly. In the case of picture data, several kinds of methods for specifying a range of a specific section of the picture data are considered depending on a medium for storing media and hardware reproducing the media. It is assumed here that a SMPTE time code notation (HH:MM:SS:FF representing o'clock: minutes: seconds: frame) is used . The range of a specific section of the picture data is specified by start and end time codes. However, it is inconvenient for the operator to specify time codes and to indicate reproduction of the picture. The operator recognizes as an object a section of the picture between the start and end time codes, adds annotation (comment information) to the object, and then stores the resulting information in the annotation management database 50.

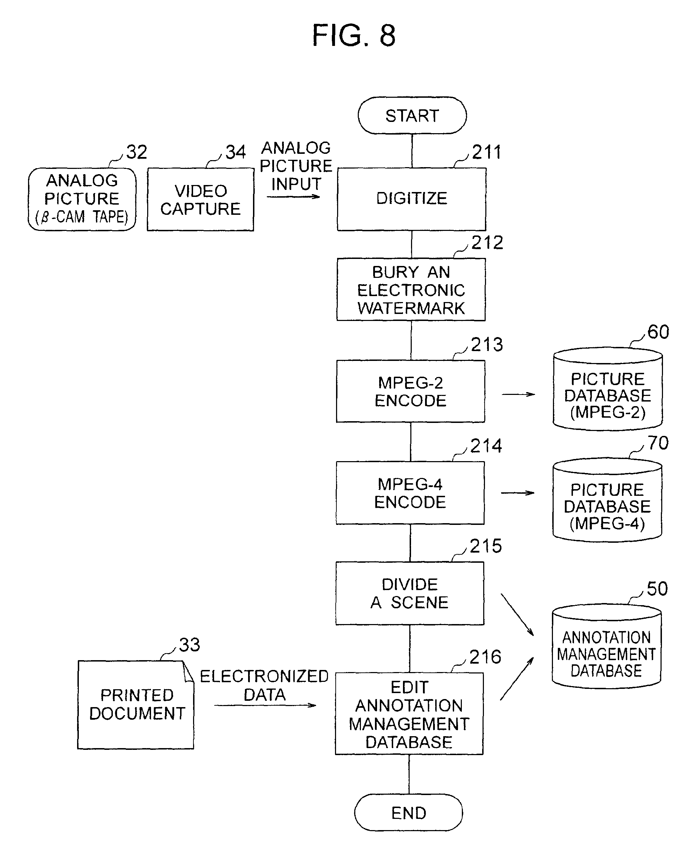

The encoding/index program 21 is not necessarily required to be executed by the selling device 1. It is to be noted that the respective databases 50-70 which store data obtained in this processing are required to be always referrable to by the selling device 1. The details of the encode/index program 21 will be described next with reference to FIG. 8.

Analog picture data stored in a tape medium for example, a β-cam tape) 32 is input via the video capture 34 to the selling device 1. It is then digitized (step 211), information on the copyright holder and/or his or her product is buried as an electronic watermark into the digitized picture data (step 212), the resulting data is then encoded according to the MPEG-2 standards, and the resulting data is then stored in the picture database (MPEG-2) 60 (step 213).

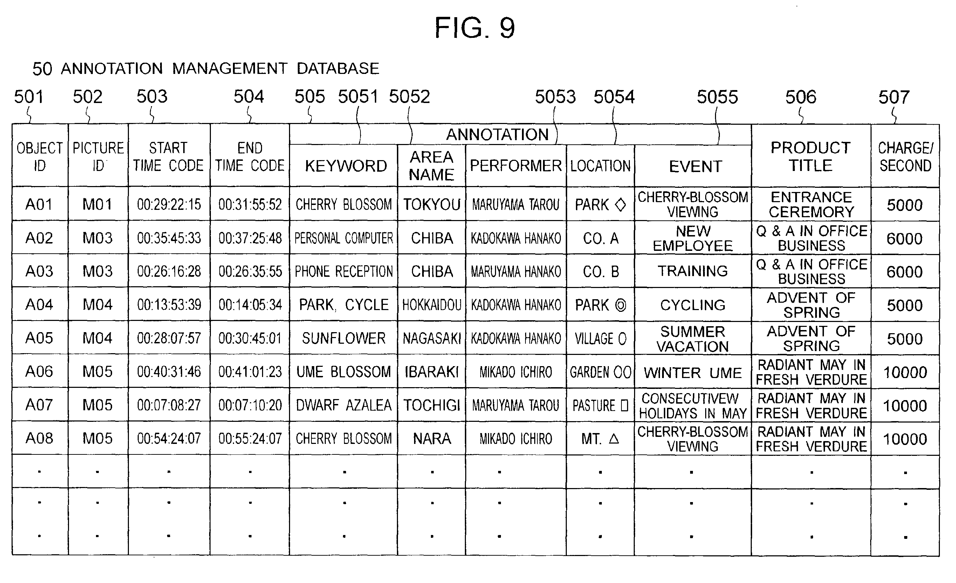

In step 214 the picture data digitized in step 211 is encoded according to MPEG-4, and then resulting data is stored in the picture database (MPEG-4) 70. In addition, in step 215 the scene is divided and the resulting scene data are registered in the annotation management database 50, which collectively manages identification information on the object to which the annotation is added, its specified section and the annotation information. The annotation management database 50 of FIG. 9 stores a plurality of objects and a plurality of records in corresponding relationship. Each record comprises an object ID 501, a picture ID 502 representing a name of a file which stores a picture, start and end time codes 503 and 504 defining a specified section to which an annotation 505 is added, annotation 505, a product title 506, and a charge for use of the file 507. The annotation is set for the contents of the picture, and one or more kinds of annotation may be set. In this example, the annotation comprises a keyword 5051, an area name 5052, a performer 5053, a location 5054, and an event 5055. In step 215 a point where the scene changes is extracted from the picture data digitized in step 211, the picture is then divided accordingly, and their time codes are stored as start and end time codes 503 and 504 in the annotation management database 50. At this time, an object ID of a unique value is automatically produced and registered as an object ID 501, and a picture ID 502 is also registered. In step 216 the annotation management database 50 is edited. Source data for the object annotation is obtained by reading a printed document 33 with an OCR device or the like or by manually inputting the printed document data to the input device 30 to form electric data, and an annotation 505, a product title 506 and a charge for use of the picture 507 are then registered in the annotation management database 50.

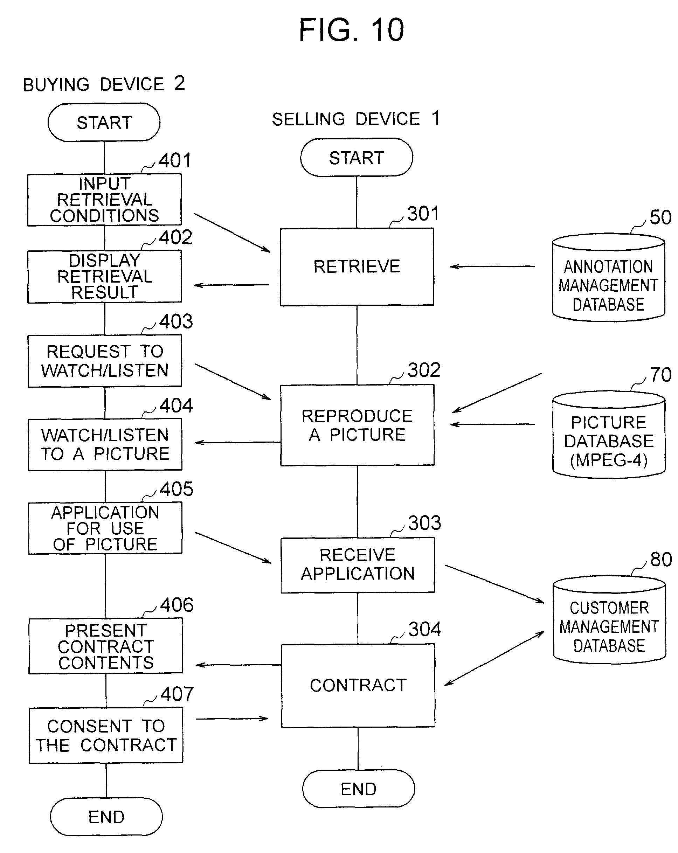

The promotion/retrieval/net contract program 22 will be explained with reference to a flowchart of FIG. 10.

In step 401 when the buyer starts up the WWW browser 91 from the input device 31 of the buying device 1, and specifies a URL (Uniform Resource Locator) indicative of an address of a homepage for picture retrieval, the display device 41 displays a retrieval picture. When the buyer inputs the retrieval conditions for a picture from the input device 31 to the buying device 2, in step 301 the selling device 2 receives the retrieval conditions via the WWW server · CGI 90, starts up the retrieval watch/listen program 221 of the promotion/retrieval/net contract program 22, refers to the annotation management database 50 under the input retrieval condition, and retrieves the picture or product based on the specified retrieval conditions. As a result of the retrieval, the selling device 1 sends the buying device 2 the product title name 506 and object ID 501 via the WWW server·CGI 90, and displays a plurality of product titles 506 on the display device 41 of the buying device 2 (step 402).

When the buyer specifies a title of a product to be watched/listened to from the displayed plurality of product titles, and expresses watching/listening to the corresponding product from the input device to the selling device 1 (step 403), in step 302 the selling device 1 receives the object ID 501, refers to the annotation management database 50 to detect a picture ID 502, start and end time codes 503 and 504 corresponding to the object ID 501, and reproduces on the display device 41 from the picture database (MPEG-4) 70 a section defined by the start and end time codes 503 and 504 of the appropriate picture ID 502. If the picture which the buyer watched and listened to in step 404 is not a desired one, the buyer again expresses watching/listening to another picture in step 403. If the desired picture is obtained, the buyer applies for using the picture in step 405. In this case, the buyer inputs to the input device 31 information about the buyer himself or herself, a title of a picture product which is used (picture ID 502) and a section of the picture to be used (defined by the start and end time codes 503 and 504) and an object to use the picture. In addition, information on a copyright of the picture may be input at this stage. When the selling device 1 receives an application for using the picture from the buying device 2, it examines the contents displayed on the display device 40 (step 303). In more detail, the selling device 1 determines based on its past history of dealings whether the buyer is appropriate for the selling device 1 to lend the picture by referring to the contents of the customer management database 80. If the buyer is, in step 304 the selling device 1 performs a contracting process which includes displaying on the display device 41 of the buyer device 2 the contents of a contract such as conditions of a secondary use of the picture (step 406).

In step 407 when the buyer gives his or her assent to the contents of the contract from the buying device 2, the selling device 1 receives a notice of the buyer's assent, registers the contents of the contract in the customer management database 80, and then closes the promotion/retrieval/net contract program 22.

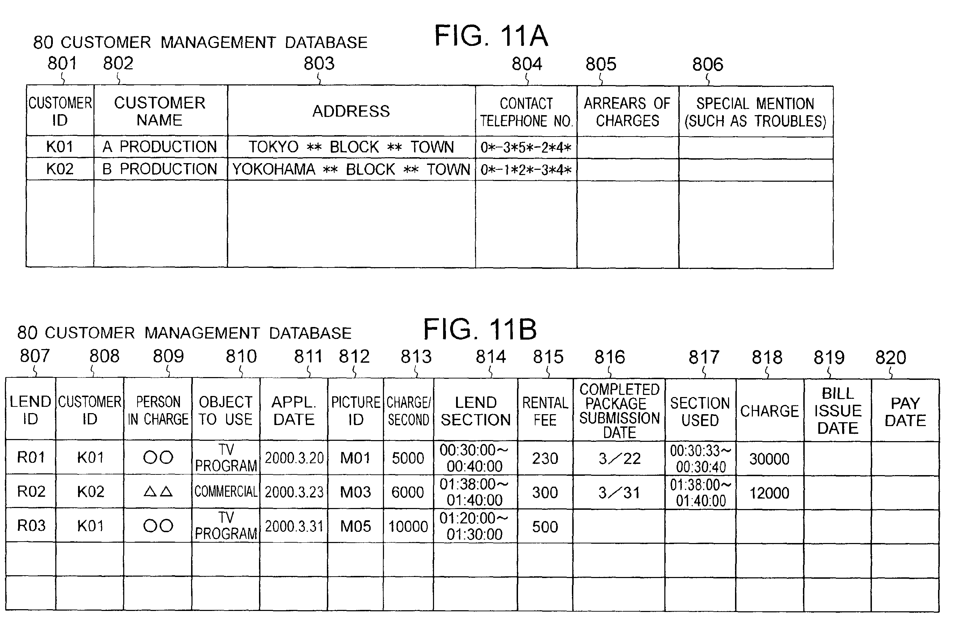

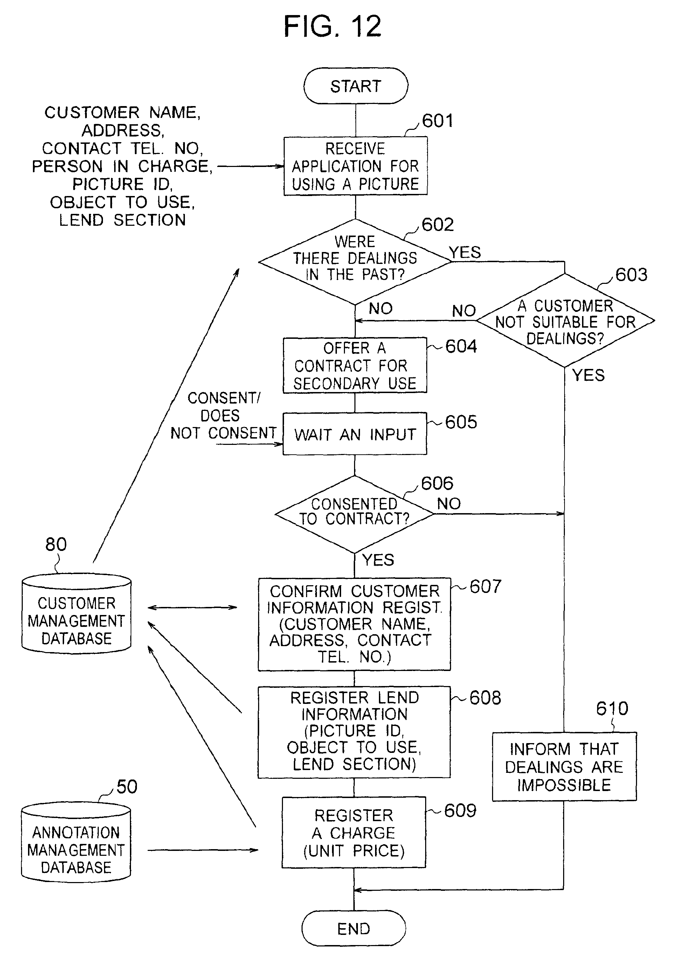

The contents of the customer management database 80 will be explained next with reference to FIGS. 11A and 11B. A customer ID 801, a customer name 802, an address 803, a contact telephone No. 804, presence of arrears 805 and a highly special mention 806 are records to be registered when the buyer applies for borrowing the picture first, and are the functions of a customer register. A lend ID 807, a customer ID 808, a person in charge 809, an object to use the picture 810, an application date 811, a picture ID 812, a charge/second 813, a lend section 814, a rental fee 815, a complete package submission date 816, a use section 817, a charge for use of the picture 818, a bill issue 819, and payment 820 are records registered each time an application for borrowing the picture is received, and manage the history of dealings. A method of registering a customer management database 80 in the contract program 222 will be described next according to the flow chart of Fig. 12. In step 405 when the buyer inputs to the input device 31 of the buying device 2 as information about the buyer himself or herself a customer's name, address and contact telephone No., a person in charge, a picture ID, an object to use a picture, and a lending section, the selling device 1 receives an application for using the picture in step 601, and refers to the customer management database 80 to check to see whether the contact telephone No. 804 is registered in the key (step 602). If it is, the selling device 1 refers to presence of arrears of charges 805 for having used pictures, and a special mention 806 to examine the data displayed on the display device 40 to thereby determine whether there were no problems in the past dealings. If there were, the control passes to step 610. If otherwise, the control passes to step 604. In step 604, the selling device 1 displays the contract conditions for secondary use of the picture on the display device 41 of the buying device 2, and in step 605 waits for a reply from the buying device 2. In step 606 if the selling device 1 receives no reply of consent, the control passes to step 610, and if otherwise, the control passes to step 607 where the customer information is registered. If the customer information is already registered, the customer ID 801 is only required to be detected and not required to be registered. The customer name 802, address 803, and contact telephone No. 804 are registered from the information input by the buyer.

The customer ID 801 is automatically produced when registered. In step 608 the selling device 1 registers the name of the person in charge 809, object to use the picture 810, picture ID 812 and lend section 814 from the information input by the buyer. The selling device transfers the customer ID 808 by referring to the customer numbers 801. The lending ID 807 is automatically employed when registered. The application date 811 is transferred from the date information which the selling device 1 holds. In step 609 the selling device 1 refers to the annotation management database 50, retrieves a charge/second 507 for the picture ID 812, and transfers its value to the charge/second 813.

In the electronic watermarked picture providing program 23, the selling device 1 refers to the customer management database 80 to extract picture data of a section specified by the lend section 814 from a picture file of MPEG-2 corresponding to the picture ID 812 and stores it in another file, and then transfers it to the buying device 2. At this time, a rental fee may be appropriated for an extract charge, and a charge for a duration time of the extracted picture is registered in the rental fee 815 of the customer management database 80.

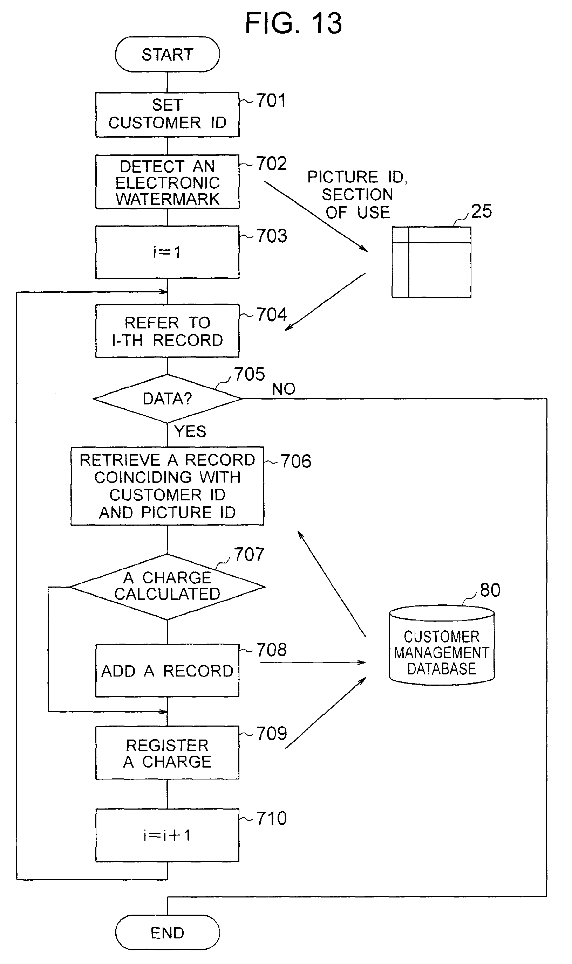

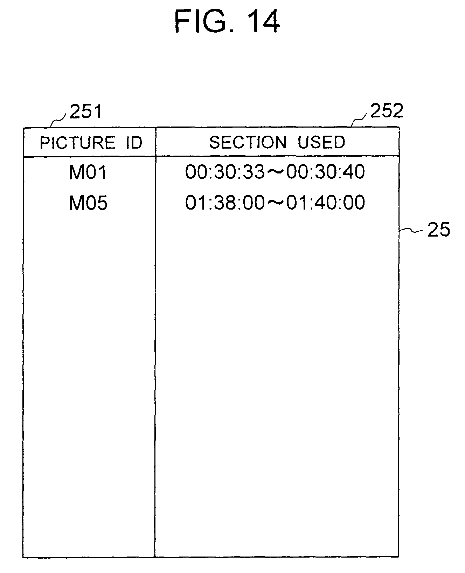

The buyer receives an extracted picture file 62 through the network device 46 from the seller and creates a picture by secondary use of the file. It is assumed herein that an analog picture is created. The buyer submits a completed package of a picture created in the secondary use to the seller, who executes the electronic watermark detection/picture use confirmation program 24. A process performed by the electronic watermark detection/picture use confirmation program 24 will be described with reference to a flowchart of FIG. 13. The seller receives the complete package. First, in step 701 the seller inputs to the input device 30 the ID of the buyer or customer who submitted the complete package. In step 702 the complete package is set in the video capture and then the electronic watermark detection program 241 is started up. A picture ID is buried as an electronic watermark. The detected picture ID and section are stored on an electronic watermark detect table (not shown) of the work area 25 of FIG. 14.

After detecting the electronic watermark, the charge calculation program 242 is started up. Thus, in step 703 the value of a counter i (not shown) is set to 1. In step 704 an i^{th} record on the electronic watermark detect table is referred to. If it is determined in step 705 that there are no data stored, the process ends. If there are data, in step 706 the customer management database 80 is referred to and a record which coincides with customer ID 808 and picture ID 812 is retrieved. If the charge 818 is already registered in step 707, which implies that the picture was secondarily used, in step 708 data on the customer ID 808, person in charge 809, object to use 810, application data 811, picture ID 812, charge/second 813, lend section 814, already registered, are copied and added to the customer management database 80. In step 709 the value of the use section 252 of the i^{th} record of the work area 25 is registered in the use section 817 of the customer management database 80. In addition, a charge 818 is calculated from the charge/second 813 and use section 817, and registered along with a complete package submission date 816. In step 710 the counter i is counted up and the control then returns to step 704. When a bill is issued, the customer management database 80 is referred to and a bill is issued to a buyer for which no history of bill issues is registered in the bill issue 819. When the customer pays for the charge, this fact is registered on the payment 820.

In the above, a new business model concerning secondary use of a picture has been proposed. Retrieval, watch/listen, application for use, and contract of a documentary picture and delivery of an extracted picture which relied on hands in the past are possible on the Internet. By carrying out the present invention, services are possible in a production market related to television broadcasting which covers a "special program" to news from Tokyo to every district in the whole country, the secondary use of pictures is activated and the market scale will increase.

While in the past the section of a picture used secondarily is detected visually, an electronic watermark information buried in the lent picture cannot be erased semipermanently. Thus, detection of a section secondarily used from a completed package is possible, and calculation of a charge for use of the information can be performed without relaying on hands.

The present invention also applies to music, using electronic watermark information.

As will be obvious from the above, the present invention provides a data selling method and system capable of adding to data information which indicates the data source to clarify a copyright holder of the data.

## Claims

1. A method of selling data, comprising the steps of:
retrieving data (202);
extracting a part of data which contains a buried electronic watermark from the data retrieved and outputting extracted data (204); and
detecting electronic watermark information buried in the data (205).

2. The method according to claim 1, wherein the data comprises picture information.

3. The method according to claim 2, wherein said step of detecting the electronic watermark comprises detecting from the picture information a section of the picture information where the electronic watermark is buried, and further comprising the steps of: retrieving a charge unit corresponding to the electronic watermark information detected from a customer management database (80), and calculating a charge for use of the picture information (206).

4. The method according to claim 1, wherein the data comprises music information.

5. The method according to claim 4, wherein said step of detecting the electronic watermark comprises detecting from the music information a section of the music information where the electronic watermark is buried, and further comprising the steps of: retrieving a charge unit corresponding to the electronic watermark information detected from a customer management database (80), and calculating a charge for use of the music information (206).

6. A system for selling data, comprising:
means (10, 224) for retrieving data;
means (10, 23) for extracting a part of data which contains a buried electronic watermark from the data retrieved and for outputting extracted data; and
means (10, 24) for detecting electronic watermark information buried in the data.

7. The system according to claim 6, wherein the data comprises picture information.

8. The system according to claim 7, wherein said detecting means comprises means (10) for detecting from the picture information a section of the picture information where the electronic watermark is buried, and further comprising means (10, 206) for retrieving a charge unit corresponding to the electronic watermark information detected from a customer management database (80), and for calculating a charge for use of the picture information.

9. The system according to claim 6, wherein the data comprises music information.

10. A computer readable storage medium which prestores a program for selling data, comprising the steps of:
retrieving data (202);
extracting a part of data which contains a buried electronic watermark from the data retrieved and outputting extracted data (204); and
detecting electronic watermark information buried in the data (205).

11. A program for selling data, comprising the steps of:
retrieving data (202) ;
extracting a part of data which contains a buried electronic watermark from the data retrieved and outputting extracted data (204); and
detecting electronic watermark information buried in the data (205).
